# EUROPÄISCHE PATENTSCHRIFT

(11) **EP 2 312 928 B1**
(45) Veröffentlichungstag und Bekanntmachung des Hinweises auf die Patenterteilung: **25.01.2012**
(21) Anmeldenummer: 09780288.8
(22) Anmeldetag: 07.07.2009
(51) Int. Cl.: A01D 75/18, F16P 3/00, F16H 61/42

(54) **ANTRIEBSSYSTEM FÜR EINEN EINZUGSFÖRDERER EINER ERNTEMASCHINE**
DRIVE SYSTEM FOR AN INFEED CONVEYOR OF A HARVESTER
SYSTÈME D'ENTRAÎNEMENT POUR UN TRANSPORTEUR D'ALIMENTATION DE MOISSONNEUSE

(30) Priorität: 11.07.2008 DE 102008040357; 06.05.2009 DE 102009002849
(43) Veröffentlichungstag der Anmeldung: 27.04.2011
(73) Patentinhaber: Deere & Company, Moline, IL 61265-8098 (US); Robert Bosch GmbH, 70442 Stuttgart (DE)
(72) Erfinder: BOHRER, Stefan, 66606 St. Wendel (DE); ROSSBACH, Konrad, 89358 Kammeltal (DE)
(74) Vertreter: Holst, Sönke
(86) Internationale Anmeldenummer: PCT/EP2009/058636
(87) Internationale Veröffentlichungsnummer: WO 2010/003966

(56) Entgegenhaltungen:
- EP-A- 1 721 518
- WO-A-01/65919
- WO-A-02/09498

## Beschreibung

Die Erfindung betrifft ein Antriebssystem für einen Einzugsförderer einer Erntemaschine.

### Stand der Technik

Bei landwirtschaftlichen Erntemaschinen besteht die Gefahr, dass neben dem Erntegut auch Fremdkörper vom Feld aufgenommen werden und in die Erntemaschine gelangen, die einerseits Komponenten der Erntemaschine beschädigen oder zerstören können und andererseits im Erntegut unerwünscht sind, da sie bei dessen Verarbeitung oder Verfütterung an Tiere unerwünschte Folgeschäden nach sich ziehen können. Es ist daher gebräuchlich, am Einzugskanal der Erntemaschine oder davor Fremdkörperdetektoren anzubringen, die im Fall des Nachweises eines Fremdkörpers den Einzug der Erntemaschine so schnell anhalten, dass keine Schäden an der Erntemaschine auftreten und der Fremdkörper aus dem Erntegut entfernt werden kann. Derartige Fremdkörperdetektoren arbeiten beispielsweise auf Induktionsbasis, um ferromagnetische Fremdkörper nachweisen zu können (s. beispielsweise DE 199 12 407 A1), erfassen die beim Einzug eines Fremdkörpers sprunghaft ansteigende Schichtdicke einer Erntegutmatte (DE 10 2006 043 373 A1) oder basieren auf Geräuschen, die harte Fremdkörper beim Aufprall auf Walzen oder andere Elemente der Erntemaschine bzw. eines Erntevorsatzes erzeugen (DE 10 2006 033 100 A1).

Um den Einzugsförderer in der notwendigen, recht kurzen Zeit anzuhalten, werden üblicherweise Sperrklinken verwendet, die im Fall des Nachweises eines Fremdkörpers mittels eines Elektromagneten oder Hydraulikzylinders betätigt werden und in ein mit dem Einzugsförderer drehfest verbundenes Zahnrad eingreifen (s. DE 199 55 901 A und den dort zitierten Stand der Technik), wobei gleichzeitig oder kurz vorher eine Kupplung im Antriebsstrang des Einzugsförderers ausgerückt wird. Die Kupplung, das Zahnrad, die Sperrklinken und ihr Antrieb sind relativ aufwändig.

Außerdem wurde vorgeschlagen, den Einzugsförderer hydraulisch anzutreiben, unter Verwendung einer vom Verbrennungsmotor der Erntemaschine angetriebenen Hydropumpe und eines hydraulikfluidleitend damit verbundenen Hydromotors, der den Einzugsförderer antreibt. Hierzu sei auf die CH 554 132 A5, DE 33 41 071 A1, WO 01/65919 A1, WO 02/09498 A1 und EP 1 721 518 A1verwiesen. Die Abschaltung des Hydromotors und damit des Einzugsförderers im Fall des Nachweises eines Fremdkörpers erfolgt über ein zwischen der Hydropumpe und dem Hydromotor angeordnetes Ventil, das gemäß der CH 554 132 A5 manuell und der anderen, erwähnten Druckschriften mittels des Fremdkörperdetektors gesteuert wird. In der WO 02/09498 A1 wird vorgeschlagen, im Fall des Nachweises eines Fremdkörpers auch die elektrohydraulische verstellbare Hydropumpe auf null zu stellen, so dass dann auch der Fluss durch eine Bypassleitung unterbleibt, durch die das in eine Anhaltestellung verbrachte Ventil den von der Pumpe kommenden Hydraulikfluidstrom umlenkt. Die Verstellung der Einzugsgeschwindigkeit erfolgt gemäß der WO 01/65919 A1, WO 02/09498 A1 und EP 1 721 518 A1 durch eine Verstellung der Hydropumpe, während das Schluckvolumen des Hydromotors fest ist. Bei den hydraulischen Antrieben der Einzugsförderer, die im Fall des Nachweises eines Fremdkörpers auf einem Abschalten des Hydrofluidflusses durch den Hydromotor beruhen, ist der Aufwand für die Ventile zur Schnellabschaltung des Hydromotors als nachteilig anzusehen.

### Aufgabe der Erfindung

Die der Erfindung zu Grunde liegende Aufgabe wird darin gesehen, ein Antriebssystem für einen Einzugsförderer einer Erntemaschine bereitzustellen, das im Falle des Nachweises eines Fremdkörpers auf einfache, aber wirkungsvolle Weise ein Abschalten des Einzugsförderers ermöglicht.

### Lösung

Diese Aufgabe wird erfindungsgemäß durch die Lehre der Patentansprüche 1 und 8 gelöst, wobei in den weiteren Patentansprüchen Merkmale aufgeführt sind, die die Lösung in vorteilhafter Weise weiterentwickeln.

Ein Antriebssystem für einen Einzugsförderer einer Erntemaschine umfasst eine Hydropumpe mit verstellbarer Flussrate und Flussrichtung. Die Hydropumpe ist in der Regel mechanisch von einem Verbrennungsmotor her antreibbar und hydraulikfluidleitend mit einem Hydromotor verbunden, welcher seinerseits den Einzugsförderer mechanisch antreibt. Eine Steuerung ist mit einem Fremdkörperdetektor und einem ersten Ventil verbunden, das einen Aktor zur Verstellung der Flussrate und Flussrichtung der Hydropumpe kontrolliert. Die Steuerung steuert das erste Ventil im Fall des Nachweises eines Fremdkörpers durch den Fremdkörperdetektor zumindest kurzzeitig im Sinne einer Umkehrung der Flussrichtung an, so dass sich der Hydromotor nicht mehr nennenswert in Förderrichtung drehen kann.

Auf diese Weise erreicht man, dass die Hydropumpe sehr schnell in die Nullstellung verbracht wird und nur noch eine minimale Hydraulikfluidmenge an den Hydromotor liefert, so dass dieser sich nicht mehr nennenswert in der Förderrichtung drehen kann, sondern instantan stehen bleibt und der Fremdkörper keinen Schaden an der Erntemaschine anrichten kann. Der Aktor und das Ventil arbeiten vorzugsweise elektrohydraulisch, obwohl es auch denkbar wäre, als Aktor einen Elektromagneten vorzusehen und als Ventil einen elektronischen Schalter (z. B. Transistor, Thyristor oder Relais) zur elektrischen Ansteuerung des Elektromagneten.

Die Steuerung steuert vorzugsweise das erste Ventil für eine Zeitspanne im Sinne einer Umkehrung der Flussrichtung an, die derart bemessen ist, dass der Hydromotor sofort anhält, aber nicht in der Gegenrichtung dreht. Dabei wäre es denkbar, aber nicht unbedingt erforderlich, dass das (elektrohydraulische) Ventil tatsächlich über die Neutralstellung hinaus gelangt oder (bei elektrohydraulischer oder elektromechanischer Ansteuerung) sogar die Hydropumpe einen der Flussrichtung beim Erntebetrieb entgegen gerichteten Hydraulikfluidfluss an den Hydromotor bereitstellt. Es wäre weiterhin möglich, den Hydromotor nach Ansprechen des Fremdkörperdetektors kontinuierlich rückwärts anzutreiben, um den Fremdkörper wieder aus dem Einzug der Erntemaschine hinauszufördern, wozu ggf. auch der Erntevorsatz zu reversieren wäre (s. EP 0 904 684 A1).

Der erste Aktor ist bei einer bevorzugten Ausführungsform der Erfindung ein doppelt wirkender Hydraulikzylinder, der mit einem Ventil verbunden ist, welches durch einen ersten Elektromagneten vorzugsweise gegen die Kraft einer ersten Feder in eine erste Position verbringbar ist, in welcher der Hydromotor in die für den Erntebetrieb geeignete Richtung dreht und durch einen zweiten Elektromagneten vorzugsweise gegen die Kraft einer zweiten Feder in eine zweite Position verbringbar ist, in welcher der Hydromotor in die gegenüber dem Erntebetrieb umgekehrte Richtung dreht. Die Steuerung stellt im Fall des Nachweises eines Fremdkörpers durch den Fremdkörperdetektor den ersten Elektromagneten stromlos und bestromt den zweiten Elektromagneten zumindest kurzzeitig, zweckmäßigerweise für eine relativ kurze Zeit, die derart bemessen ist, dass der Hydromotor gerade eben anhält, aber nicht in der Gegenrichtung dreht.

Durch Parallelschalten zweier Ventile, die beide synchron durch die Steuerung angesteuert werden, kann die Flussrate des Hydraulikfluids zum und vom ersten Aktor vergrößert werden, was zu einer weiteren Verkürzung der Ansprechzeit der Hydropumpe im Fall des Nachweises eines Fremdkörpers führt. Der Druck zur Ansteuerung des ersten Aktors kann weiterhin durch einen Druckspeicher abgepuffert werden.

Alternativ oder zusätzlich zur Lehre des Anspruchs 1 wird vorgeschlagen, dass das Schluckvolumen des Hydromotors durch einen zweiten, mit der Steuerung verbundenen Aktor veränderbar ist. Die Verstellbarkeit des Hydromotors ermöglicht gegenüber einem Hydromotor mit festem Schluckvolumen größere Fördergeschwindigkeiten des Einzugsförderers zu erzielen, indem durch den zweiten Aktor die Taumelscheibe des Hydromotors auf eine Stellung unterhalb des Maximalwerts gebracht wird. Falls der Fremdkörperdetektor anspricht und einen Fremdkörper nachweist, veranlasst die Steuerung den ersten Aktor, die Hydropumpe auf eine Verdrängung von null zu stellen und den zweiten Aktor, das Schluckvolumen des Hydromotors zu vergrößern, vorzugsweise auf den Maximalwert, insbesondere wenn es zum Zeitpunkt des Ansprechens des Fremdkörperdetektors unterhalb eines vorbestimmten Werts liegt, bei dem es sich vorzugsweise ebenfalls um den Maximalwert handelt. Da die Hydropumpe nach dem Ansprechen des Fremdkörperdetektors noch eine gewisse Menge des Hydraulikfluids fördert, und der Winkel, um den der Hydromotor aufgrund dieser Menge noch weiterdreht, umgekehrt proportional zum Schluckvolumen des Hydromotors ist, führt das hier vorgeschlagene, durch die Steuerung vergrößerte bzw. auf den Maximalwert verstellte Schluckvolumen zu einem möglichst kleinen, nach dem Ansprechen des Fremdkörperdetektors noch verbleibenden Drehwinkel des Hydromotors. Auch hier arbeiten die Aktoren und die Ventile für die Hydropumpe und den Hydromotor vorzugsweise elektrohydraulisch, obwohl es auch denkbar wäre, als Aktoren Elektromagneten vorzusehen und elektronische Schalter als Ventile.

Vorzugsweise sind die Hydropumpe und der Hydromotor innerhalb eines geschlossenen hydraulischen Kreises angeordnet, d. h. der Auslass der Hydropumpe ist direkt mit dem Einlass des Hydromotors verbunden und umgekehrt. Durch das Zurückschwenken der Hydropumpe und ggf. das Verstellen des Hydromotors auf ein großes Schluckvolumen wird in diesem geschlossenen hydraulischen Kreis stromab des Hydromotors ein Druck aufgebaut, der den Hydromotor abbremst. Mit der Steuerung verbundene Ventile, die durch den Fremdkörperdetektor angesteuert werden, sind demnach nicht vorgesehen. Das Anhalten des Einzugsförderers basiert einzig und allein auf der Verstellung des Aktors der Hydropumpe und ggf. des Aktors des Hydromotors.

### Ausführungsbeispiel

Anhand der Abbildungen wird ein Ausführungsbeispiel der Erfindung erläutert. Es zeigen:
- Fig. 1: eine schematische seitliche Ansicht einer selbstfahrenden Erntemaschine in Form eines Feldhäckslers, und
- Fig. 2: eine schematische Draufsicht auf das Antriebssystem des Einzugsförderers der Erntemaschine und die zugehörige Hydraulik.

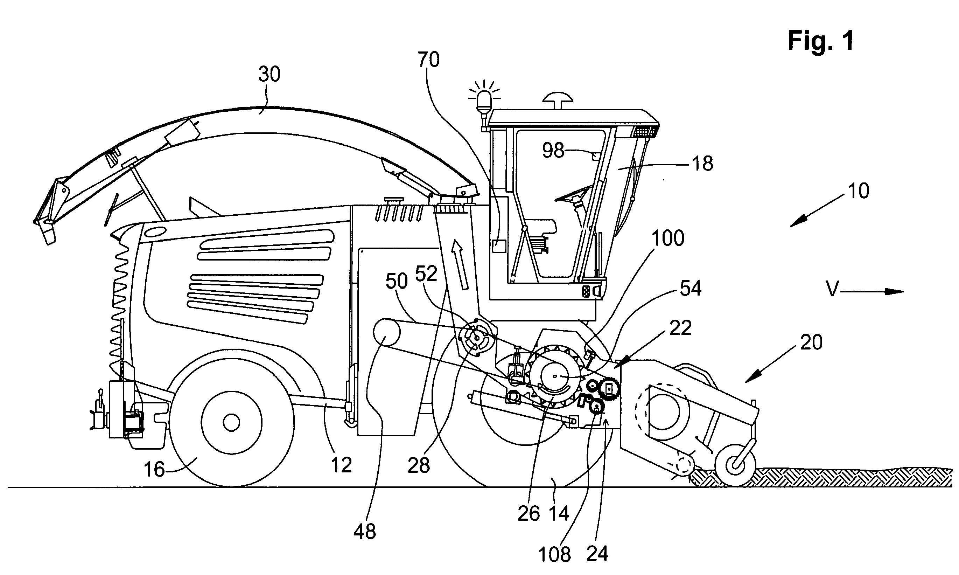

In der Figur 1 ist eine Erntemaschine 10 in der Art eines selbstfahrenden Feldhäckslers in schematischer Seitenansicht dargestellt. Die Erntemaschine 10 baut sich auf einem Rahmen 12 auf, der von vorderen angetriebenen Rädern 14 und lenkbaren rückwärtigen Rädern 16 getragen wird. Die Bedienung der Erntemaschine 10 erfolgt von einer Fahrerkabine 18 aus, von der aus ein Erntevorsatz 20 in Form eines Aufnehmers einsehbar ist. Mittels des Erntevorsatzes 20 vom Boden aufgenommenes Erntegut, z. B. Gras oder dergleichen wird über einen Einzugsförderer 22 mit Vorpresswalzen, die innerhalb eines Einzugsgehäuses 24 an der Frontseite des Feldhäckslers 10 angeordnet sind, einer unterhalb der Fahrerkabine 18 angeordneten Häckseleinrichtung 26 in Form einer Häckseltrommel zugeführt, die es in kleine Stücke häckselt und es einer Fördervorrichtung 28 aufgibt. Das Gut verlässt die Erntemaschine 10 zu einem nebenher fahrenden Transportfahrzeug über einen um eine etwa vertikale Achse drehbaren und in der Neigung verstellbaren Austragschacht 30. Im Folgenden beziehen sich Richtungsangaben, wie seitlich, unten und oben, auf die Vorwärtsrichtung V der Erntemaschine 10, die in der Figur 1 nach rechts verläuft.

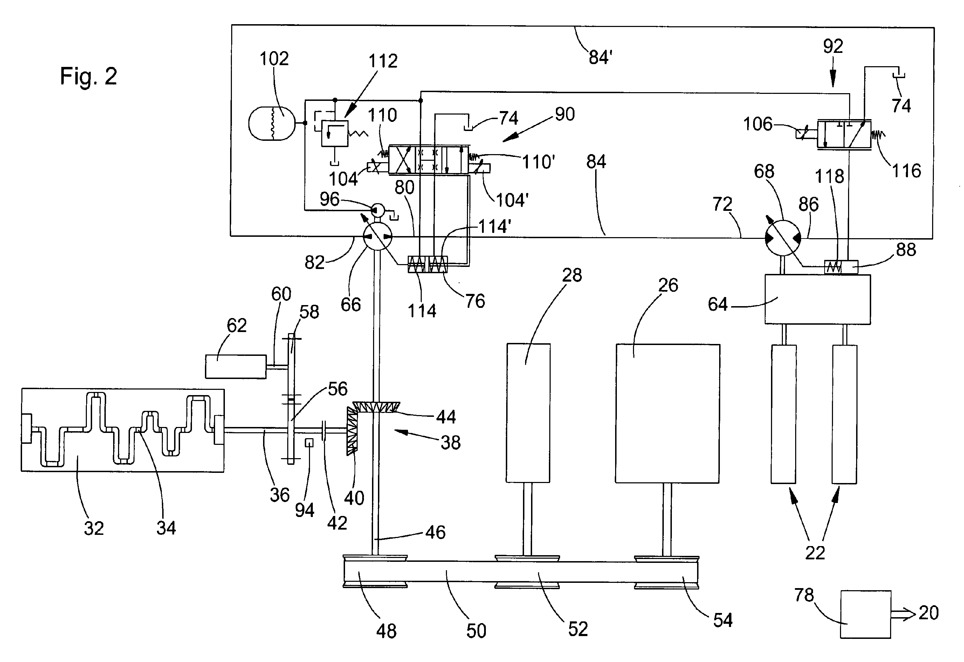

Die Figur 2 zeigt eine Draufsicht auf die Antriebsanordnung der Erntemaschine 10. Im rückwärtigen Bereich der Erntemaschine 10 befindet sich ein Verbrennungsmotor 32 insbesondere in Form eines Dieselmotors, der mit Längsträgern und/oder Querträgern des Rahmens 12 verbunden ist. Der Verbrennungsmotor 32 erstreckt sich in der Vorwärtsrichtung der Erntemaschine 10 bis etwa zum rückwärtigen Ende des Rahmens 12 und umfasst eine Kurbelwelle 34, die sich nach vorn aus dem Gehäuse des Verbrennungsmotors 32 heraus erstreckt. Die Kurbelwelle 34 treibt eine sich horizontal und nach vorn erstreckende Ausgangswelle 36 an. Anders als dargestellt, kann die Erntemaschine 10 auch mehr als einen Verbrennungsmotor 32 aufweisen, so dass die zur Verfügung stehende Antriebsleistung durch Zuschalten eines zweiten Verbrennungsmotors und/oder Umschalten auf einen zweiten, schwächeren oder gleichstarken oder stärkeren Verbrennungsmotor verändert werden kann.

Die Ausgangswelle 36 ist an ihrem vorderen Ende mit einem Winkelgetriebe 38 verbunden, das sich aus einem ersten Kegelzahnrad 40, welches über eine Kupplung 42 mit der Längswelle 36 verbunden ist, und aus einem zweiten Kegelzahnrad 44 zusammensetzt, das mit dem ersten Kegelzahnrad 40 kämmt. Die Drehachse des zweiten Kegelzahnrads 44 erstreckt sich horizontal und quer zur Vorwärtsrichtung. Das zweite Kegelzahnrad 44 ist mit einer Welle 46 verbunden, die eine Riemenscheibe 48 antreibt. Die Riemenscheibe 48 wird von einem Treibriemen 50 umschlungen, der auch eine Riemenscheibe 52 für den Antrieb der Fördereinrichtung 28 und eine Riemenscheibe 54 zum Antrieb der Häckseleinrichtung 26 umschlingt. Das Winkelgetriebe 38, die Welle 46, die Riemenscheiben 48 und 54 und der Triebriemen 50 bilden einen Antriebsstrang, der die Ausgangswelle 36 mit der Häckseleinrichtung 26 verbindet. Zwischen der Kupplung 42 und der Ausgangswelle 36 können selbstverständlich weitere Elemente des Antriebsstrangs angeordnet werden, wie Zahnradgetriebe, Riemen, und dergleichen. Außerdem könnte der Verbrennungsmotor 32 quer zur Fahrtrichtung angeordnet werden und das Winkelgetriebe 38 entfallen. Die Kupplung 42 muss nicht als Reibungskupplung mit Scheiben ausgebildet sein, wie dargestellt, sondern kann auch als lös- und spannbarer Riementrieb oder auf beliebige andere Weise ausgeführt werden.

Die Längswelle 36 trägt zwischen der Kupplung 42 und dem Gehäuse des Verbrennungsmotors 32 noch ein am Umfang verzahntes Zahnrad 56, das mit einem weiteren Zahnrad 58 kämmt, welches über eine Welle 60 ein Pumpenaggregat 62 antreibt, das zur Versorgung der Hydromotoren zum Antrieb der Räder 14, 16 und anderer hydraulisch angetriebener Komponenten der Erntemaschine 10 dient.

Die Welle 46 steht in der dargestellten Ausführungsform permanent mit einer Hydropumpe 66 mit verstellbarer Verdrängung und Flussrichtung in Antriebsverbindung. Bei einer anderen, nicht dargestellten Ausführungsform ist zwischen der Welle 46 und der Hydropumpe 66 noch ein Schaltgetriebe angeordnet, das es ermöglicht, anstelle der Hydropumpe 66 einen Reversiermotor an die Welle 46 anzukoppeln, um bei gelöster Kupplung 42 die Häckseleinrichtung 26 in gegenüber dem Erntebetrieb umgekehrter Richtung anzutreiben und ihre Messer mittels einer Schleifeinrichtung 100 zu schleifen.

Die Hydropumpe 66 ist hydraulikfluidleitend in einem geschlossenen Kreis mit einem Hydromotor 68 verbunden, der ein verstellbares Schluckvolumen aufweist und über ein Getriebe 64 die Vorpresswalzen des Einzugsförderers 22 antreibt. Ein weiterer Hydromotor 78 dient zum Antrieb der angetriebenen Elemente des Erntevorsatzes 20, bei dem es sich auch um einen Mähvorsatz zur Maisernte oder Erzeugung von Ganzpflanzensilage handeln könnte. Der weitere Hydromotor 78 wird durch eine Pumpe des Pumpenaggregats 62 angetrieben.

Ein Einlass 80 der Hydropumpe 66 und ein Auslass 72 des Hydromotors 68 sind durch eine erste Druckleitung 84 direkt, d. h. ohne Zwischenschaltung von Ventilen o. ä. untereinander verbunden. Ein Auslass 82 der Hydropumpe 66 und ein Einlass 86 des Hydromotors 68 sind durch eine zweite Druckleitung 84' direkt, d. h. ohne Zwischenschaltung von weiteren Ventilen o. ä., untereinander verbunden.

Eine Steuerung 70 (s. Figur 1) steuert über ein erstes elektromagnetisches Ventil 90 in Form eines Proportionalventils, dessen Stellung mit einem mit der Steuerung 70 elektrisch verbundenen Elektromagnetenpaar 104, 104' kontrolliert wird, einen ersten Aktor 76 an, der als doppeltwirkender Hydraulikzylinder in Form eines Gleichgangzylinders ausgeführt ist und die Flussrate und Flussrichtung der Hydropumpe 66 beeinflusst. Außerdem steuert die Steuerung 70 über ein zweites elektromagnetisches Ventil 92, dessen Stellung mit einem mit der Steuerung 70 elektrisch verbundenen Elektromagneten 106 kontrolliert wird, einen zweiten Aktor 88 an, der als einfach wirkender Hydraulikzylinder ausgeführt ist und das Schluckvolumen des Hydromotors 68 zwischen einem minimalen und einem maximalen Schluckvolumen verstellt. Die Ventile 90, 92 sind eingangsseitig einerseits mit einer den Druck zur Verstellung der Taumelscheiben der Hydropumpe 66 und des Hydromotors 68 bereitstellenden Pumpe 96, deren Druck durch einen Druckspeicher 102 gepuffert wird, und andererseits mit einem Behälter 74 für Hydraulikfluid verbunden. Die Pumpe 96 wird mit von der Welle 46 angetrieben und kann im Gehäuse der Hydropumpe 66 angeordnet sein, oder sie ist Teil des Pumpenaggregats 62. Die Pumpe 96 stellt einen hinreichend hohen, durch ein Druckbegrenzungsventil 112 begrenzten Druck bereit, um die Aktoren 88 und 76 hinreichend schnell verstellen zu können, und der Druckspeicher 102 sorgt für den dazu erforderlichen Volumenstrom. Bei beiden Ventilen 90, 92 handelt es sich um Proportionalventile. Um die Verstellung der Hydropumpe 66 zu beschleunigen, könnte ein gleichartiges, weiteres erstes Ventil (nicht gezeigt) zu dem ersten Ventil 90 parallel geschaltet und synchron damit durch die Steuerung 70 betätigt werden. Der Druckspeicher 102 (oder ein weiterer, nicht gezeigter Druckspeicher) könnte auch stromab des Ventils 90 an der rechts eingezeichneten Leitung zum Aktor 76 angeschlossen werden. In der Regel sind der Aktor 76 und vorzugsweise auch das Ventil 90 in das Gehäuse der Hydropumpe 66 integriert, wie analog der Aktor 88 und vorzugsweise auch das Ventil 92 in das Gehäuse des Hydromotors 68 integriert sind. Anstelle der dargestellten, elektrohydraulischen Verstellung der Hydropumpe 66 und/oder des Hydromotors 68 könnte auch eine rein elektromagnetische Verstellung verwendet werden.

Schließlich ist die Steuerung 70 mit einem Aktor 94, der die Kupplung 42 öffnet und schließt, mit einer in der Fahrerkabine 18 angeordneten Bedienereingabeeinrichtung 98, und mit einem Fremdkörperdetektor 108 verbunden. Letzterer befindet sich in der unteren, vorderen Einzugswalze des Einzugsförderers 22 und erfasst ferromagnetische Körper, die in der eingezogenen Erntegutmatte enthalten sind. Es kann alternativ oder zusätzlich auch ein beliebiger anderer Fremdkörperdetektor verwendet werden, der beispielsweise auf beim Aufprall von Steinen erzeugtem Schall und/oder sprunghaft ansteigende Durchsätze reagiert, die anhand der Position einer oberen Walze des Einzugsförderers 22 erfasst werden, oder auf elektromagnetischen Wellen basiert, die die Erntegutmatte durchleuchten.

Die Bedienereingabeeinrichtung 98 ermöglicht es dem Bediener, einen (Straßen-) Fahrbetrieb auszuwählen, in dem die Kupplung 42 geöffnet ist und weder die Häckseleinrichtung 26 noch der Einzugsförderer 22 angetrieben wird, da auch die Hydropumpe 66 stillsteht. Auch die weitere Hydropumpe 78 und somit der Erntevorsatz 20 werden dann nicht angetrieben. Die Räder 14 und ggf. (bei Allradantrieb) auch 16 werden über ihre Hydromotore und das Pumpenaggregat 62 angetrieben.

Weiterhin ermöglicht die Bedienereingabeeinrichtung 98 dem Bediener, einen Erntebetrieb auszuwählen, in dem die Kupplung 42 geschlossen ist und die Häckseleinrichtung 26 und die Fördervorrichtung 28 über den Triebriemen 50 angetrieben werden. Die Welle 46 treibt dann auch die Hydropumpe 66 an, welche über die Leitung 84' den Hydromotor 68 beaufschlagt, der wiederum den Einzugsförderer 22 antreibt. Der Erntevorsatz 20 wird dann vom Pumpenaggregat 62 über den weiteren Hydromotor 78 angetrieben. Die Aktoren 76, 88 werden durch die Steuerung 70 über die den Ventilen 92, 92 zugeordneten Elektromagnete 104 und 106 derart angesteuert, dass sich eine gewünschte Schnittlänge des Häckselgutes ergibt, die durch die Bedienereingabeeinrichtung 98 eingegeben werden kann oder selbsttätig durch die Steuerung anhand von Messwerten von Sensoren vorgegeben wird, die Eigenschaften des Häckselguts erfassen, wie Feuchtigkeit oder Verdichtbarkeit. Vorzugsweise wird das Schluckvolumen des Hydromotors 68 auf den jeweils zur Erzielung der gewünschten Schnittlänge größtmöglichen Wert gestellt und die Verdrängung der Hydropumpe 66 entsprechend angepasst, um ein möglichst hohes Drehmoment des Einzugsförderers 22 zu erzielen. Die Verstellbarkeit des Hydromotors 68 ermöglicht gegenüber einem Hydromotor mit festem Schluckvolumen größere Fördergeschwindigkeiten des Einzugsförderers 22 und somit kleinere Schnittlängen zu erzielen, indem durch den Aktor 92 die Taumelscheibe des Hydromotors 68 auf eine Stellung unterhalb des Maximalwerts gebracht wird.

Beim Erntebetrieb wird der Elektromagnet 104 des Ventils 90 der Hydropumpe 66 bestromt, der das Ventil 90 gegen die Kraft einer ersten Feder 110' nach links zieht und in eine Stellung bringt, in welcher der Aktor 76 die Taumelscheibe der Hydropumpe 66 in eine Position verbringt, in welcher die Hydropumpe 66 Hydraulikfluid durch den Auslass 82 und die Leitung 84' zum Einlass 86 des Hydromotors 68 fördert, welches dann durch die Leitung 84 vom Auslass 72 des Hydromotors 68 zum Einlass 80 der Hydropumpe 66 gelangt. Die Begriffe Einlass und Auslass beziehen sich demnach auf die Flussrichtung des Hydraulikfluids im Erntebetrieb. Beim Erntebetrieb wird der Elektromagnet 104' nicht bestromt (aber ggf. der Elektromagnet 106). Zum durch den Bediener mittels der Bedienereingabeeinrichtung 98 veranlassten Anhalten des Hydromotors 66 nach Ende des Erntebetriebs wird lediglich der Elektromagnet 104 durch die Steuerung stromlos geschaltet, so dass das Ventil 90 dann durch die Feder 110' in die Neutralstellung gebracht wird, woraufhin auch der Aktor 76 durch die Kraft einer integrierten Feder 114' in die Neutral- oder Mittelstellung gebracht wird, in welcher das Fördervolumen der Hydropumpe 66 null ist. Die Bedienereingabeeinrichtung 98 ermöglicht auch die Auswahl eines Reversiermodus, in dem der Einzugsförderer 22 in gegenüber dem Erntebetrieb umgekehrter Richtung angetrieben wird. Dann bestromt die Steuerung 70 nur den Elektromagneten 104', welcher das Ventil 90 gegen die Kraft einer zweiten Feder 110 nach rechts zieht und es somit in eine Stellung bringt, in welcher der Aktor 76 die Taumelscheibe der Hydropumpe 66 in eine Position verbringt, in welcher die Hydropumpe 66 Hydraulikfluid durch die Leitung 84 zum Hydromotor 68 fördert, welches dann durch die Leitung 84' zurück zur Hydropumpe 66 fließt. Beim Reversieren wird der Elektromagnet 104 nicht bestromt. Nach dem Ende des Reversierbetriebs stellt die Steuerung 70 den Elektromagneten 104' stromlos, so dass das Ventil 90 dann durch die Feder 110 in die Neutralstellung gebracht wird, woraufhin auch der Aktor 76 durch die Kraft einer integrierten Feder 114 in die Neutral- oder Mittelstellung gebracht wird, in welcher das Fördervolumen der Hydropumpe 66 null ist.

Es ist anzumerken, dass der Druck in den Leitungen 84, 84' durch Druckbegrenzungsventile (nicht gezeigt) begrenzt und die Leitungen 84, 84' durch weitere Ventile (nicht gezeigt) mit hinreichenden Mengen an Hydraulikfluid versorgt werden können. Hierzu sei auf den eingangs zitierten Stand der Technik verwiesen.

Falls der Fremdkörperdetektor 108 beim Erntebetrieb einen Fremdkörper im Einzugsförderer 22 nachweist und der Steuerung 70 ein entsprechendes Signal übermittelt, stellt die Steuerung 70 sofort den Elektromagneten 104 stromlos, sodass die Feder 110' bestrebt ist, das Ventil 90 und somit auch den Aktor 76 in die Neutralstellung zu verbringen. Dieser Vorgang wird durch eine gleichzeitige, zeitlich begrenzte Bestromung des Elektromagneten 104' beschleunigt. Somit wird der Hydraulikfluidfluss in der Leitung 84 instantan abgestellt. In der Figur 2 wird das Ventil 90 demnach in die rechte Stellung verbracht. Die Bestromung des zweiten Elektromagneten 104' dauert zeitlich gerade so lange, bis der Hydromotor 68 zum Stehen kommt, aber noch nicht in der Gegenrichtung dreht.

Gleichzeitig veranlasst die Steuerung 70 den Elektromagneten 106, das Ventil 92 in die Stellung zu verbringen, in welcher der Aktor 88 die Taumelscheibe des Hydromotors 68 in eine Stellung maximalen Schluckvolumens bewegt, falls er sich nicht bereits in dieser Stellung befindet. Vorzugsweise wird der Elektromagnet 106 (anders als in der Figur 2 dargestellt) in der Stellung maximalen Schluckvolumens mit maximalem elektrischen Strom beaufschlagt, so dass das Ventil 92 aktiv durch den Elektromagneten 106 in die Durchlassstellung verbracht wird und der Druck von der Pumpe 96 dann aktiv den Aktor 88 gegen die Kraft einer im Aktor 88 integrierten Feder 118 in die gewünschte Stellung verbringt. Eine andere Variante, bei der eine Feder 116 das Ventil 92 zum Erreichen eines maximalen Schluckvolumens des Hydromotors 68 in eine Schließstellung bringt und/oder die Feder 118 den Aktor 88 und die Taumelscheibe des Hydromotors 68 in eine Stellung maximalen Schluckvolumens bewegt, ist jedoch ebenfalls denkbar.

Durch die Aktivierung des Elektromagneten 104' erreicht man, dass nach dem Ansprechen des Fremdkörperdetektors 108 nur noch wenig Hydraulikfluid durch die Leitung 84 strömt, und dieser Fluss den Hydromotor 68 aufgrund des angesteuerten maximalen Schluckvolumens nur um einen minimalen Winkel weiterdrehen lässt. Durch das Zurückschwenken der Schwenkplatte der Hydropumpe 66 wird im geschlossenen hydraulischen Kreislauf stromab des Hydromotors 68 zusätzlich ein Druck aufgebaut, der den Hydromotor 68 abbremst. Demnach hält der Einzugsförderer 22 hinreichend schnell an, um Schäden an der Häckseleinrichtung 26 durch den Fremdkörper zu vermeiden.

Anschließend kann die Steuerung 70 selbsttätig oder auf eine Eingabe des Bedieners in die Bedienereingabeeinrichtung 98 hin die Elektromagnete 104' und ggf. 106 veranlassen, einen Hydraulikfluss in der Leitung 84 herzustellen und den Hydromotor 68 in gegenüber dem Erntebetrieb umgekehrter Richtung anzutreiben, so dass der Einzugsförderer 22 reversiert wird, um den Fremdkörper wieder auszustoßen. Gleichzeitig reversiert der weitere Hydromotor 78 auch den Antrieb des Erntevorsatzes 20. Nach erfolgtem Reversiervorgang, der Untersuchung des ausgestoßenen Ernteguts durch den Bediener und dessen Bestätigung, dass der Fremdkörper beseitigt wurde, wird durch eine entsprechende Eingabe in die Bedienereingabeeinrichtung 98 die Steuerung 70 veranlasst, den normalen Erntebetrieb wieder aufzunehmen.

## Patentansprüche

1. Antriebssystem für einen Einzugsförderer (22) einer Erntemaschine (10), umfassend:
eine verstellbare Hydropumpe (66), deren Flussrate und Flussrichtung mittels eines ersten Aktors (76) verstellbar ist, welcher durch ein erstes Ventil (90) ansteuerbar ist,
einen hydraulikfluidleitend mit der Hydropumpe (66) verbundenen Hydromotor (68), der mit dem Einzugsförderer (22) in Antriebsverbindung steht, und
eine mit dem ersten Ventil (90) und einem Fremdkörperdetektor (108) verbundene Steuerung (70), die betreibbar ist, im Fall des Nachweises eines Fremdkörpers durch den Fremdkörperdetektor (108) über das erste Ventil (90) den ersten Aktor (76) zu veranlassen, die Flussrate der Hydropumpe (66) auf null zu stellen,
**dadurch gekennzeichnet, dass** die Steuerung (70) eingerichtet ist, das erste Ventil (90) im Fall des Nachweises eines Fremdkörpers durch den Fremdkörperdetektor (108) zumindest kurzzeitig im Sinne einer Umkehrung der Flussrichtung derart anzusteuern, dass sich der Hydromotor (68) sich nicht mehr nennenswert in der Förderrichtung drehen kann.

2. Antriebssystem nach Anspruch 1, **dadurch gekennzeichnet, dass** die Steuerung (70) betreibbar ist, das erste Ventil (90) für eine Zeitspanne im Sinne einer Umkehrung der Flussrichtung anzusteuern, die derart bemessen ist, dass der Hydromotor (68) instantan anhält, aber nicht in der Gegenrichtung dreht.

3. Antriebssystem nach Anspruch 1 oder 2, **dadurch gekennzeichnet, dass** der erste Aktor (76) ein doppelt wirkender Hydraulikzylinder ist, der mit dem Ventil (90) verbunden ist, welches durch einen ersten Elektromagneten (104) in eine Position verbringbar ist, in welcher der Hydromotor (68) in die für den Erntebetrieb geeignete Richtung dreht und durch einen zweiten Elektromagneten (104') in eine Position für eine gegenüber dem Erntebetrieb umgekehrte Flussrichtung des Hydraulikfluids und Drehrichtung des Hydromotors (68) verbringbar ist,
und dass die Steuerung (70) betreibbar ist, im Fall des Nachweises eines Fremdkörpers durch den Fremdkörperdetektor (108) den ersten Elektromagneten (104) stromlos zu stellen und den zweiten Elektromagneten (104') zumindest kurzzeitig zu bestromen.

4. Antriebssystem nach Anspruch 3, **dadurch gekennzeichnet, dass** der erste Elektromagnet (104) gegen die Kraft einer ersten Feder (110) arbeitet und dass der zweite Elektromagnet (104') gegen die Kraft einer zweiten Feder (110') arbeitet.

5. Antriebssystem nach einem der Ansprüche 1 bis 4, **dadurch gekennzeichnet, dass** zwei oder mehrere Ventile (90) parallel geschaltet sind.

6. Antriebssystem nach einem der Ansprüche 1 bis 5, **dadurch gekennzeichnet, dass** der Betriebsdruck des Aktors (76) durch einen Druckspeicher (102) gepuffert ist.

7. Antriebssystem nach einem der Ansprüche 1 bis 6, **dadurch gekennzeichnet, dass** das Ventil (90) ein Proportionalventil ist.

8. Antriebssystem für einen Einzugsförderer (22) einer Erntemaschine (10), insbesondere nach einem der vorhergehenden Ansprüche, umfassend:
eine Hydropumpe (66), deren Flussrate mittels eines ersten Aktors (76) verstellbar ist,
einen hydraulikfluidleitend mit der Hydropumpe (66) verbundenen Hydromotor (68), der mit dem Einzugsförderer (22) in Antriebsverbindung steht, und
eine mit dem ersten Aktor (76) und einem Fremdkörperdetektor (108) verbundene Steuerung (70), die betreibbar ist, im Fall des Nachweises eines Fremdkörpers durch den Fremdkörperdetektor (108) den ersten Aktor (76) zu veranlassen, die Flussrate der Hydropumpe (66) auf null zu stellen,
**dadurch gekennzeichnet, dass** der Hydromotor (68) ein durch einen mit der Steuerung (70) verbundenen, zweiten Aktor (88) verstellbares Schluckvolumen aufweist,
und die Steuerung (70) betreibbar ist, im Fall des Nachweises eines Fremdkörpers durch den Fremdkörperdetektor (108) den zweiten Aktor (88) zu veranlassen, das Schluckvolumen des Hydromotors (68) zu vergrößern, vorzugsweise auf den Maximalwert.

9. Antriebssystem nach Anspruch 8, **dadurch gekennzeichnet, dass** die Steuerung (70) betreibbar ist, im Fall des Nachweises eines Fremdkörpers durch den Fremdkörperdetektor (108) den zweiten Aktor (88) nur dann zu veranlassen, das Schluckvolumen des Hydromotors (68) zu vergrößern, wenn es zum Zeitpunkt des Ansprechens des Fremdkörperdetektors unterhalb eines vorbestimmten Werts, insbesondere des Maximalwerts, liegt.

10. Antriebssystem nach einem der Ansprüche 1 bis 9, **dadurch gekennzeichnet, dass** der Auslass (82) der Hydropumpe (66) direkt mit dem Einlass (86) des Hydromotors (68) verbunden ist, und der Auslass (72) des Hydromotors (68) direkt mit dem Einlass (80) der Hydropumpe (66) verbunden ist.

11. Einzugsförderer (22) mit einem Antriebssystem nach einem der Ansprüche 1 bis 10.

12. Erntemaschine (10), insbesondere Feldhäcksler, mit einem Einzugsförderer (22) nach Anspruch 11.

## Claims

1. Drive system for an intake conveyor (22) of a harvester (10), comprising:
an adjustable hydraulic pump (66), the flow rate and flow direction of which are adjustable by means of a first actuator (76) which is actuable by a first valve (90),
a hydraulic motor (68) which is connected to the hydraulic pump (66) in a manner conducting hydraulic fluid and is drive-connected to the intake conveyor (22), and
a controller (70) which is connected to the first valve (90) and to a foreign-body detector (108) and which is operable, if a foreign body is detected by the foreign-body detector (108), to cause the first actuator (76), via the first valve (90), to set the flow rate of the hydraulic pump (66) to zero,
**characterized in that** the controller (70) is designed, if a foreign body is detected by the foreign-body detector (108), to actuate the first valve (90) such that it reverses the flow direction, at least for a short time, so that the hydraulic motor (68) can no longer rotate appreciably in the conveying direction.

2. Drive system according to Claim 1, **characterized in that** the controller (70) is operable to actuate the first valve (90) such that it reverses the flow direction for a time period, with the reversal being such that the hydraulic motor (68) stops instantaneously but does not rotate in the opposite direction.

3. Drive system according to Claim 1 or 2, **characterized in that** the first actuator (76) is a double-acting hydraulic cylinder connected to the valve (90), which is movable by a first electromagnet (104) into a position in which the hydraulic motor (68) rotates in the direction suitable for harvesting operation, and is movable by a second electromagnet (104') into a position for a flow direction of the hydraulic fluid and rotational direction of the hydraulic motor (68) which is reversed with respect to harvesting operation,
and **in that** the controller (70) is operable, if a foreign body is detected by the foreign-body detector (108), to set the first electromagnet (104) into the de-energized state and to energize the second electromagnet (104') at least for a short time.

4. Drive system according to Claim 3, **characterized in that** the first electromagnet (104) works counter to the force of a first spring (110), and **in that** the second electromagnet (104') works counter to the force of a second spring (110').

5. Drive system according to one of Claims 1 to 4, **characterized in that** two or more valves (90) are connected in parallel.

6. Drive system according to one of Claims 1 to 5, **characterized in that** the operating pressure of the actuator (76) is buffered by a pressure store (102).

7. Drive system according to one of Claims 1 to 6, **characterized in that** the valve (90) is a proportional valve.

8. Drive system for an intake conveyor (22) of a harvester (10), in particular according to one of the preceding claims, comprising:
a hydraulic pump (66), the flow rate of which is adjustable by means of a first actuator (76),
a hydraulic motor (68) which is connected to the hydraulic pump (66) in a manner conducting hydraulic fluid and is drive-connected to the intake conveyor (22), and
a controller (70) which is connected to the first actuator (76) and to a foreign-body detector (108) and which is operable, if a foreign body is detected by the foreign-body detector (108), to cause the first actuator (76) to set the flow rate of the hydraulic pump (66) to zero,
**characterized in that** the hydraulic motor (68) has a displacement volume that is adjustable by a second actuator (88) connected to the controller (70),
and the controller (70) is operable, if a foreign body is detected by the foreign-body detector (108), to cause the second actuator (88) to increase the displacement volume of the hydraulic motor (68), preferably to the maximum value.

9. Drive system according to Claim 8, **characterized in that** the controller (70) is operable, if a foreign body is detected by the foreign-body detector (108), to cause the second actuator (88) to increase the displacement volume of the hydraulic motor (68) only when it is below a predetermined value, in particular the maximum value, at the moment that the foreign-body detector responds.

10. Drive system according to one of Claims 1 to 9, **characterized in that** the outlet (82) of the hydraulic pump (66) is connected directly to the inlet (86) of the hydraulic motor (68), and the outlet (72) of the hydraulic motor (68) is connected directly to the inlet (80) of the hydraulic pump (66).

11. Intake conveyor (22) having a drive system according to one of Claims 1 to 10.

12. Harvester (10), in particular a forage harvester, having an intake conveyor (22) according to Claim 11.

## Revendications

1. Système d'entraînement pour un transporteur d'alimentation (22) d'une moissonneuse (10), comprenant :
une pompe hydraulique réglable (66) dont le débit et le sens d'écoulement peuvent être réglés au moyen d'un premier actionneur (76) qui peut être commandé par une première soupape (90),
un moteur hydraulique (68) connecté par conduction de fluide hydraulique à la pompe hydraulique (66), qui est en liaison d'entraînement avec le transporteur d'alimentation (22), et
une commande (70) connectée à la première soupape (90) et à un détecteur de corps étrangers (108), qui peut être actionnée, dans le cas de la mise en évidence d'un corps étranger par le détecteur de corps étrangers (108), par le biais de la première soupape (90) pour autoriser le premier actionneur (76) à mettre à zéro le débit de la pompe hydraulique (66),
**caractérisé en ce que** la commande (70) est prévue pour commander la première soupape (90) dans le cas de la mise en évidence d'un corps étranger par le détecteur de corps étrangers (108) au moins brièvement dans le sens d'une inversion du sens d'écoulement de telle sorte que le moteur hydraulique (68) ne puisse plus tourner de manière notoire dans le sens de refoulement.

2. Système d'entraînement selon la revendication 1, **caractérisé en ce que** la commande (70) peut être actionnée de manière à commander la première soupape (90) pendant un intervalle de temps dans le sens d'une inversion du sens d'écoulement, lequel intervalle de temps est ajusté de telle sorte que le moteur hydraulique (68) s'arrête instantanément mais ne tourne pas dans le sens inverse.

3. Système d'entraînement selon la revendication 1 ou 2, **caractérisé en ce que** le premier actionneur (76) est un cylindre hydraulique à double action, qui est connecté à la soupape (90), qui peut être amenée par un premier électroaimant (104) dans une position dans laquelle le moteur hydraulique (68) tourne dans la direction appropriée pour le mode de récolte, et qui peut être amenée par un deuxième électroaimant (104') dans une position pour un sens d'écoulement du fluide hydraulique et un sens de rotation du moteur hydraulique (68) inversés par rapport au mode de récolte,
et **en ce que** la commande (70) peut être actionnée dans le cas de la mise en évidence d'un corps étranger par le détecteur de corps étrangers (108), pour couper le courant dans le premier électroaimant (104) et pour faire circuler du courant au moins brièvement à travers le deuxième électroaimant (104').

4. Système d'entraînement selon la revendication 3, **caractérisé en ce que** le premier électroaimant (104) travaille à l'encontre de la force d'un premier ressort (110) et **en ce que** le deuxième électroaimant (104') travaille à l'encontre de la force d'un deuxième ressort (110').

5. Système d'entraînement selon l'une quelconque des revendications 1 à 4, **caractérisé en ce que** deux soupapes ou plus (90) sont montées en parallèle.

6. Système d'entraînement selon l'une quelconque des revendications 1 à 5, **caractérisé en ce que** la pression de fonctionnement de l'actionneur (76) est amortie par un accumulateur de pression (102).

7. Système d'entraînement selon l'une quelconque des revendications 1 à 6, **caractérisé en ce que** la soupape (90) est une soupape proportionnelle.

8. Système d'entraînement pour un transporteur d'alimentation (22) d'une moissonneuse (10), en particulier selon l'une quelconque des revendications précédentes, comprenant :
une pompe hydraulique (66) dont le débit peut être réglé au moyen d'un premier actionneur (76),
un moteur hydraulique (68) connecté par conduction de fluide hydraulique à la pompe hydraulique (66), qui est en liaison d'entraînement avec le transporteur d'alimentation (22), et
une commande (70) connectée au premier actionneur (76) et à un détecteur de corps étrangers (108), qui peut être actionnée, dans le cas de la mise en évidence d'un corps étranger par le détecteur de corps étrangers (108), pour autoriser le premier actionneur (76) à mettre à zéro le débit de la pompe hydraulique (66),
**caractérisé en ce que** le moteur hydraulique (68) présente une cylindrée réglable par un deuxième actionneur (88) connecté à la commande (70),
et la commande (70) peut être actionnée, dans le cas de la mise en évidence d'un corps étranger par le détecteur de corps étrangers (108), pour autoriser le deuxième actionneur (88) à augmenter la cylindrée du moteur hydraulique (68), de préférence à la valeur maximale.

9. Système d'entraînement selon la revendication 8, **caractérisé en ce que** la commande (70) peut être actionnée, dans le cas de la mise en évidence d'un corps étranger par le détecteur de corps étrangers (108), pour autoriser le deuxième actionneur (88) à augmenter la cylindrée du moteur hydraulique (68) seulement lorsqu'à l'instant de la réaction du détecteur de corps étrangers, elle est en dessous d'une valeur prédéterminée, notamment de la valeur maximale.

10. Système d'entraînement selon l'une quelconque des revendications 1 à 9, **caractérisé en ce que** la sortie (82) de la pompe hydraulique (66) est connectée directement à l'entrée (86) du moteur hydraulique (68), et la sortie (72) du moteur hydraulique (68) est connectée directement à l'entrée (80) de la pompe hydraulique (66).

11. Transporteur d'alimentation (22) comprenant un système d'entraînement selon l'une quelconque des revendications 1 à 10.

12. Moissonneuse (10), en particulier faucheuse-hacheuse, comprenant un transporteur d'alimentation (22) selon la revendication 11.
